(19)

Europäisches
Patentamt

European
Patent Office

Office européen
des brevets

(11)  **EP 4 682 008 A1**

(12)  **EUROPEAN PATENT APPLICATION**

(43) Date of publication:
**21.01.2026  Bulletin 2026/04**

(21) Application number: **25154358.3**

(22) Date of filing: **28.01.2025**

(51) International Patent Classification (IPC):
**B60W 30/18** (2012.01)

(52) Cooperative Patent Classification (CPC):
**B60W 30/18163;** B60W 2520/10; B60W 2540/30;
B60W 2552/05; B60W 2552/10; B60W 2552/30;
B60W 2552/53; B60W 2554/406; B60W 2555/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **19.07.2024  KR 20240095358**

(71) Applicants:
• **Hyundai Motor Company**
 **Seoul 06797 (KR)**
• **Kia Corporation**
 **Seocho-gu,**
 **Seoul 06797 (KR)**

(72) Inventors:
• **KIM, Seung Hwan**
 **18280 Hwaseong-si, Gyeonggi-do (KR)**
• **JANG, Chan Jong**
 **18280 Hwaseong-si, Gyeonggi-do (KR)**
• **MIN, Young bin**
 **18280 Hwaseong-si, Gyeonggi-do (KR)**
• **PARK, Jong Sung**
 **18280 Hwaseong-si, Gyeonggi-do (KR)**

(74) Representative: **Hoffmann Eitle**
 **Patent- und Rechtsanwälte PartmbB**
 **Arabellastraße 30**
 **81925 München (DE)**

(54)  **VEHICLE FOR PROVIDING DISCRETIONARY LANE CHANGE AND METHOD THEREOF**

(57)  Disclosed is a vehicle configured to provide a discretionary lane change. The vehicle may include: one or more sensors configured to generate neighboring object information; a communication interface; and a processor configured to control, based on at least one of the neighboring object information or the communication interface, an autonomous driving operation of the vehicle, wherein the processor is further configured to: determine whether a driving lane change is needed, determine whether the driving lane change is possible when the driving lane change is needed, and perform the driving lane change according to whether a discretionary lane change (DLC) function is in an active state when the driving lane change is possible.

EP 4 682 008 A1

**Description**

**TECHNICAL FIELD**

The present disclosure relates to vehicle control, and more particularly to autonomous lane changing of a vehicle.

**BACKGROUND**

According to standards of the motorway chauffeur systems (MCS), the motorway chauffeur systems must mandatorily include autonomous driving within a lane (MCS-1). The lane change is classified into two categories, that are, a discretionary lane change and the mandatory lane change. In case of the mandatory lane change, the lane change must be performed so as to arrive at a destination or to comply with laws and regulations.

In case of the discretionary lane change (DLC), the lane change may be performed so as to facilitate convenience, and is not mandatory.

**SUMMARY**

One or more example embodiments of the present disclosure disclose a vehicle which identifies a discretionary lane change for facilitating convenience and performs the lane change according to execution conditions of the lane change, and a method thereof.

The technical problem to be achieved by the present disclosure is not limited to the above-mentioned technical problem, and other technical problems that are not mentioned will be clearly understood by ordinary-skilled persons in the art to which the present disclosure pertains from the following description.

According to one or more example embodiments of the present disclosure, a vehicle may include: one or more sensors configured to generate neighboring object information; a communication interface; and a processor configured to control, based on at least one of the neighboring object information or the communication interface, an autonomous driving operation of the vehicle. The processor may be further configured to: determine, based on a command for a driving lane change, whether a safety score associated with the driving lane change is above a threshold score value; and control the autonomous driving operation of the vehicle to perform, based on the safety score being above the threshold score value, the driving lane change according to whether a discretionary lane change (DLC) function is in an active state.

The command for the driving lane change may be triggered by at least one of: a driving lane merging with a neighboring lane, the driving lane diverging from a route to a destination, an event on a road of the driving lane, or a traffic jam on the road of the driving lane.

The command for the driving lane change may be triggered by at least one of: a predetermined driving speed, a speed limit on a highway, or a traffic flow.

The command for the driving lane change may be triggered by predetermined driving pattern information.

The command for the driving lane change may be triggered by receiving, from a driver of the vehicle, a request to change to a certain lane.

The processor may be configured to determine whether the safety score is above the threshold score value by: determining the safety score based on at least one of: lane change restriction information associated with a driving lane, geometrical information associated with the driving lane, or traffic flow information associated with a new lane that the vehicle is transitioning to.

The lane change restriction information may indicate at least one of: whether a lane line of the driving lane is a solid line, whether the driving lane is in a tunnel, whether the driving lane is a shoulder, or whether the driving lane is a passing lane.

The geometrical information may indicate at least one of: whether a passing lane continues for at least a threshold distance value, whether a road ahead has a curvature above a threshold curvature value, or whether there is a road section associated with a traffic event.

The processor may be configured to control the autonomous driving operation of the vehicle to perform the driving lane change by: controlling the autonomous driving operation of the vehicle to perform, based on the safety score being above the threshold score value and the DLC function being in the active state, the driving lane change.

The processor may be configured to control the autonomous driving operation of the vehicle to perform the driving lane change by: controlling the autonomous driving operation of the vehicle to output, to a driver of the vehicle and based on the safety score being above the threshold score value and the DLC function not being in the active state, a message suggesting the driving lane change.

According to one or more example embodiments of the present disclosure, a first vehicle may include: one or more sensors configured to generate neighboring object information; a communication interface; and a processor configured to control, based on at least one of the neighboring object information or the communication interface, an autonomous driving operation of the first vehicle. The processor may be further configured to: determine, based on the neighboring object information, a second vehicle that hinders a traffic flow according to a predetermined hindrance criterion; determine, based on the second vehicle being determined, whether a safety score associated with passing the second vehicle is above a threshold score value; and control the autonomous driving operation of the first vehicle to perform, based on the safety score being above the threshold score value, a lane change from a driving lane to a passing lane according to whether a discretionary lane change (DLC) function is in an active state.

The second vehicle may be ahead of the first vehicle, and wherein the processor is configured to determine the second vehicle by: determining, based on a driving pattern of the second vehicle.

The driving pattern of the second vehicle may include at least one of: a speed of the second vehicle, an acceleration above a first threshold acceleration value, an acceleration below a second threshold value, a fluctuation, of a lateral movement of the second vehicle within the driving lane, above a fluctuation threshold value, an activation state of a hazard light of the second vehicle, or an emergency message from the second vehicle.

The processor may be configured to determine whether the safety score is above the threshold score value by: determining the safety score based on at least one of: lane change restriction information associated with the driving lane, geometrical information associated with the driving lane, or traffic flow information associated with the passing lane.

The lane change restriction information may indicate at least one of: whether a lane line of the driving lane is a solid line, whether the driving lane is in a tunnel, whether the driving lane is a shoulder, or presence of the passing lane.

The geometrical information may indicate at least one of: whether the passing lane continues for at least a threshold distance value, whether a road ahead has a curvature above a threshold curvature value, or whether there is a road section associated with a traffic event.

The processor may be configured to determine whether the safety score is above the threshold score value by: determining a quantity of one or more vehicles of a vehicle cluster, wherein the vehicle cluster comprises the second vehicle, and wherein a gap between any two vehicles in the vehicle cluster is less than a threshold distance; and determining, based on the quantity of the one or more vehicles of the vehicle cluster being less than a threshold quantity value, that the safety score associated with the passing of the second vehicle is above the threshold score value.

The processor may be configured to control the autonomous driving operation of the first vehicle to perform the lane change by: controlling the autonomous driving operation of the first vehicle to perform, based on the safety score being above the threshold score value and the DLC function being in the active state, the lane change.

The processor may be configured to control the autonomous driving operation of the first vehicle to perform the lane change by: controlling the autonomous driving operation of the first vehicle to output, to a driver of the first vehicle and based on the safety score being above the threshold score value and the DLC function not being in the active state, a message suggesting the lane change.

The processor may be configured to control the autonomous driving operation of the first vehicle to perform the lane change by: controlling the autonomous driving operation of the first vehicle to drive in the passing lane at a lowest speed of: a speed limit of the passing lane, a predetermined speed over a speed of a target vehicle to pass, and a speed of a following vehicle in the passing lane.

The processor may be configured to control the autonomous driving operation of the first vehicle to perform the lane change by: controlling the autonomous driving operation of the first vehicle to return to the driving lane after a rearmost part of the first vehicle overtakes a foremost part of a target vehicle to pass.

The processor may be further configured to: determine a second safety score associated with returning to the driving lane, based on at least one of lane change restriction information associated with the passing lane, geometrical information associated with the passing lane, or traffic flow information associated with the passing lane.

According to one or more example embodiments of the present disclosure, a method performed by an apparatus of a vehicle may include: determining, based on a command for a driving lane change whether a safety score associated with the driving lane change is above a threshold score value; and controlling an autonomous driving operation of the vehicle to perform, based on the safety score being above the threshold score value, the driving lane change according to whether a discretionary lane change (DLC) function is in an active state.

According to one or more example embodiments of the present disclosure, a method performed by an apparatus of a first vehicle may include: determining a second vehicle that hinders a traffic flow according to a predetermined hindrance criterion; determining, based on the second vehicle being determined, whether a safety score associated with passing the second vehicle is above a threshold score value; and controlling an autonomous driving operation of the first vehicle to perform, based on the safety score being above the threshold score value, a lane change from a driving lane to a passing lane according to whether a discretionary lane change (DLC) function is in an active state.

Controlling the autonomous driving operation of the first vehicle may include: controlling the autonomous driving operation of the first vehicle to return to the driving lane after a rearmost part of the first vehicle overtakes a foremost part of a target vehicle to pass.

One embodiment is a vehicle configured to provide a discretionary lane change, including: a sensor unit configured to generate neighboring object information using at least one sensor; a communication module configured to communicate with a neighboring object; and a processor configured to control an operation of a vehicle, and the processor may be configured to determine whether a driving lane change is needed, to determine whether a driving lane change is possible when a driving lane change is needed, and to perform a lane change according to whether a discretionary lane change (DLC) function is in an active state when a driving lane change is possible.

The processor may determine that the driving lane change is needed when a case thereof corresponds to at least one among a case in which a driving lane is merged with a neighboring lane, a case in which a driving lane branches off in a direction different from a destination, a case in which an event occurs on a road of a driving lane, and a case in which a traffic jam occurs only on a road of a driving lane.

The processor may determine whether the driving lane change is needed based on a preset driving speed, a limit speed on a highway, and traffic flow.

The processor may determine whether the driving lane change is needed based on preset driving manner information.

The processor may determine that the driving lane change is needed when receiving a request to change to a certain lane from a driver.

The processor may determine whether the driving lane change is possible based on at least one information among lane change restriction information within a driving lane, geometrical information, and traffic flow information within a changing lane.

The lane change restriction information may include at least one information among whether a lane line is a solid line, whether a lane is within a tunnel, whether a lane is a shoulder, and whether a lane is a passing lane.

The geometrical information may include at least one information among whether a passing lane and a main road continue, whether a sharp curvature exists in a forward direction, and whether there is an event section.

When it is determined that a driving lane change is possible and the DLC function is in an active state, the processor may perform a lane change.

When it is determined that a driving lane change is possible and the DLC function is not in an active state, the processor may propose a lane change to a driver.

Another embodiment is a vehicle configured to provide a discretionary lane change, including: a sensor unit configured to generate neighboring object information using at least one sensor; a communication module configured to communicate with a neighboring object; and a processor configured to control an operation of a vehicle, and the processor may be configured to determine a vehicle which hinders traffic flow, to determine whether passing is possible when there is the vehicle which hinders traffic flow, and to perform a passing lane change according to whether a discretionary lane change (DLC) function is in an active state when passing is possible.

The processor may determine whether the another vehicle is a vehicle which hinders traffic flow based on driving information of another vehicle on a forward side of the vehicle.

The driving information of the another vehicle on a forward side may include at least one information among speed information, whether there is sudden stopping or sudden acceleration, a change width of lateral movement within a lane, whether an emergency light blinks, and emergency message information.

The processor may determine whether passing is possible based on at least one information among lane change restriction information, geometrical information, and traffic flow information within a passing lane.

The lane change restriction information may include at least one information among whether a lane line is a solid line, whether a lane is within a tunnel, whether a lane is a shoulder, and whether a lane is a passing lane.

The geometrical information may include at least one information among whether a passing lane and a main road continue, whether a sharp curvature exists in a forward direction, and whether there is an event section.

The processor may determine whether the vehicle which hinders traffic flow corresponds to any one among single traffic flow, group traffic flow, and congested traffic flow; and determine that passing is possible when the vehicle which hinders traffic flow is a single traffic flow, or a group traffic flow.

The processor may perform a passing lane change when passing is possible and the DLC function is in an active state.

When passing is possible and the DLC function is not in an active state, the processor may propose a lane change to a driver.

The processor may perform driving in a passing lane at a lowest speed among a limit speed within a road, a faster speed than a speed of a target vehicle to pass, and a speed of a follower vehicle in a forward direction within a passing lane.

When an end point of a rear of the vehicle precedes a starting point of a front of a target vehicle to pass, the processor may perform a lane change to return to a main road.

The processor may determine whether the lane change to a main road is possible based on at least one information among lane change restriction information, geometrical information, and traffic flow information within a passing lane.

Still another embodiment is a method for changing a lane during an autonomous driving, including: determining whether a driving lane change is needed; determining whether a driving lane change is possible when a driving lane change is needed; and performing a lane change according to whether a discretionary lane change (DLC) function is in an active state when a driving lane change is possible.

Still another embodiment is a method for changing a lane during an autonomous driving, including: determining whether there is a vehicle which hinders traffic flow; determining whether passing is possible when there is the vehicle which hinders traffic flow; and performing a passing lane change according to whether a discretionary lane change (DLC) function is in an active state when passing is possible.

The method may further include: when an end point of a rear of the vehicle precedes a starting point of a front of a target vehicle to pass, performing a lane change to return to a main road after the performing a passing lane change.

## BRIEF DESCRIPTION OF THE DRAWINGS

FIG. 1 is a view of an autonomous driving system.

FIG. 2 is a block diagram of an example vehicle.

FIG. 3 is a flowchart illustrating an operation of a one-off lane change during an autonomous driving.

FIG. 4 is a view illustrating a rear distance.

FIG. 5 is a view illustrating a front distance.

FIG. 6 is a flowchart illustrating an operation of a passing lane change during an autonomous driving.

FIG. 7 is a view illustrating single traffic flow.

FIG. 8 is a view illustrating group traffic flow.

FIG. 9 is a view illustrating congested traffic flow.

## DETAILED DESCRIPTION

Herein below, one or more example embodiments of the present disclosure will be described in detail with reference to the accompanying drawings.

The construction and operational effect of the present disclosure will be clearly understood from the following detailed description. Prior to describing example embodiments of the present disclosure in detail, it is noted that throughout the drawings the same components will be denoted by the same reference numerals when possible and a detailed description about existing components and functions is omitted when the subject matter of the present disclosure may be obscured by the description.

It is also noted that terms used in the detailed description of the present disclosure are defined below.

The vehicle refers to a vehicle in which the automated driving system (ADS) is provided and is capable of the autonomous driving. For example, by the ADS, the vehicle may perform at least one among steering, acceleration, deceleration, lane change and vehicle stopping (short stop) without a driver's manipulation. For example, the ADS may include at least one among Pedestrian Detection and Collision Mitigation System (PDCMS), Lane Change Decision Aid System (LCDAS), Land Departure Warning System (LDWS), Adaptive Cruise Control (ACC), Lane Keeping Assistance System (LKAS), Road Boundary Departure Prevention System (RBDPS), Curve Speed Warning System (CSWS), Forward Vehicle Collision Warning System (FVCWS), and Low Speed Following (LSF).

A driver is a human being who uses a vehicle, and is provided with a service of an autonomous driving system.

The vehicle control authority is an authority to control at least one component of the vehicle and/or at least one function of the vehicle. At least one function of the vehicle may include, for example, at least one among steering, acceleration, deceleration (or braking), lane change, lane detection, lateral control, obstacle recognition and distance detection, powertrain control, safe area detection, engine on/off, power on/off, and vehicle lock/unlock. The listed functions of the vehicle are merely examples for helping understanding, and the present disclosure is not limited thereto.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein. One or more features associated with autonomous driving control may be activated based on configured autonomous driving control setting(s) (e.g., based on at least one of: an autonomous driving classification, a selection of an autonomous driving level for a vehicle, etc.).

{update the highlighted field in the context of specification}

Based on one or more features (e.g., autonomous driving lane change) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., autonomous driving lane change) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., autonomous driving lane change) described herein.

Minimum risk maneuver (MRM) operation(s) may also be controlled, for example, based on one or more features (e.g., autonomous driving lane change) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., autonomous driving lane change) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane.

The driving control apparatus may identify a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., autonomous driving lane change) described herein.

An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

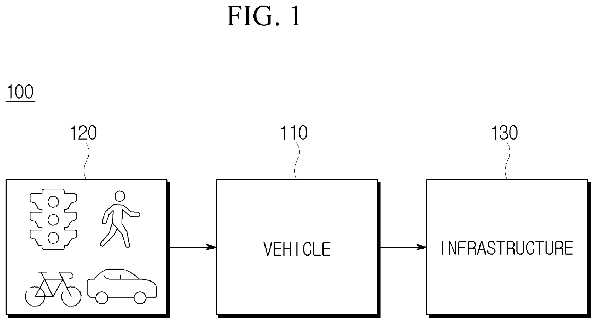

FIG. 1 is a view of the autonomous driving system.

Referring to FIG. 1, the autonomous driving system 100 may include a vehicle 110 (e.g., a first vehicle), a neighboring object 120, and an infrastructure 130.

The vehicle 110 may mean a vehicle in which the motorway chauffer systems (MCS) are provided and which performs a function of the discretionary lane change (DLC). The vehicle 110 may mean a component or a group of components capable of the DLC function.

The neighboring object 120 may mean another vehicle (e.g., a second vehicle), a pedestrian, a personal mobility device (e.g., a bicycle), and a traffic signal device. The other vehicle, the pedestrian, the personal mobility device (e.g., a bicycle), and the traffic signal device may include a communication module configured to communicate with the vehicle 110. The pedestrian may communicate with the vehicle 110 through a terminal device which includes the communication module.

The infrastructure 130 includes the communication module, and may transmit geometrical information including information of a passing lane, a main road area, a road curvature, and an event section and information of lane change restrictions to the vehicle 110.

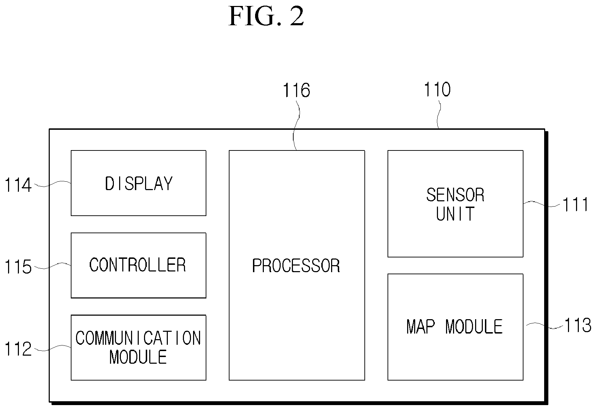

FIG. 2 is a block diagram showing an example vehicle.

The configuration of the vehicle is illustrated in FIG. 2, and each component may be configured as one chip, one component, or one electronic circuit, or a combination of chips, components, and/or electronic circuits. Some of the components illustrated in FIG. 2 may be divided into a plurality of components and configured as different chips, different components, or different electronic circuits, and some components may be combined to form one chip, one component, or one electronic circuit. Some of the components illustrated in FIG. 2 may be omitted or other components not illustrated may be added. At least some of the components of FIG. 2 will be described with reference to the subsequent drawings.

Referring to FIG. 2, the vehicle 100 may include a sensor unit (also referred to as one or more sensors) 111, a communication module (also referred to a communication interface) 112, a map module (also referred to as a digital map or a map database) 113, a display 114, a controller 115, and a processor 116.

The sensor unit 111 may sense an environment around the vehicle 110 using at least one sensor and generate data related to the surrounding environment based on the sensing result. For example, the sensor unit 111 may obtain information on objects around the vehicle (e.g., other vehicles, people, objects, curbs, guardrails, lanes, obstacles) based on the sensing data obtained from at least one sensor. Information on the object around the vehicle may include at least one among a position of the object, a size of the object, a shape of the object, a distance to the object, and a relative speed to the object. As another example, the sensor unit 111 may measure a position of the vehicle 110 using at least one sensor. For example, the sensor unit 111 may include at least one among a camera, a LIDAR sensor (light detection and ranging), a RADAR sensor (radio detection and ranging), an ultrasonic sensor, an infrared sensor, and a position measurement sensor. The listed sensors are merely examples for helping understanding, and the sensors included in the sensor unit 111 of the present disclosure are not limited thereto.

The camera may generate image data which includes an object positioned in front, at a rear and on a side of the vehicle 110, by capturing image around the vehicle. The lidar may generate information on an object positioned in front, on a rear side and/or on a side of the vehicle 100 using light (or laser). The radar may generate information on an object positioned in front, at a rear and/or on a side of the vehicle 100 using electromagnetic waves (or radio waves). The ultrasonic sensor may generate information on an object positioned in front, at a rear and/or on a side of the vehicle 100 using ultrasonic waves. The infrared sensor may generate information on an object positioned in front, at a rear and/or on a side of the vehicle 100 using infrared rays.

The position measurement sensor may measure the current position of the vehicle 110. The position measurement sensor may include at least one among a Global Positioning System (GPS) sensor, a Differential Global Positioning System (DGPS) sensor and a Global Navigation Satellite System (GNSS) sensor. The position measurement sensor may generate position data of the vehicle based on a signal generated by at least one among a GPS sensor, DGPS sensor and GNSS sensor.

The communication module 112 may transmit or receive data with the infrastructure 130. The communication may be referred to as a vehicle-to-infrastructure (V2I) communication. In addition, the communication module 112 may transmit or receive data with another vehicle. The communication may be referred to as a vehicle-to-vehicle (V2V) communication. In addition, the V2I communication and the V2V communication may be collectively referred to as a vehicle-to-everything (V2X) communication. The communication module 112 may receive data transmitted from the infrastructure 130, and process the received data and send the processed data to the processor 116. In addition, the communication module 112 may transmit data generated by the vehicle 110 to the infrastructure 130. The communication module 112 may send or receive data with a terminal of the driver of the vehicle 110.

The communication module 112 may send or receive data by using a wireless communication protocol or a wired communication protocol. Examples of a wireless communication protocol may include wireless LAN (WLAN), digital living network alliance (DLNA), wireless broadband (Wibro), world interoperability for microwave access (Wimax), global system for mobile communication (GSM), code division multi access (CDMA), code division multi access 2000 (CDMA2000), enhanced voice-data optimized or enhanced voice-data only (EV-DO), wideband CDMA (WCDMA), high speed downlink packet access (HSDPA), high speed uplink packet access (HSUPA), IEEE 802.16, long term evolution (LTE), long term evolution-advanced (LTE-A), wireless mobile broadband service (WMBS), Bluetooth, radio frequency identification (RFID), infrared data association (IrDA), Ultra-Wideband (UWB), Zigbee, near field communication (NFC), ultra sound communication (USC), visible light communication (VLC), Wi-Fi, and Wi-Fi Direct. In addition, examples of the wired communication protocol may include wired local area network (LAN), wired wide area network (WAN), power line communication (PLC), USB communication, Ethernet, serial communication, an optical/coaxial cable, and the like, but are not limited thereto, and any and all protocol which can provide an environment for communication with the other devices may be included.

The map module 113 may include map information, geometrical information per section of a highway, and information on lane change restrictions. The geometrical information may include information on a passing lane and the current lane section, information on a curvature of a road, and information on a section in which an event is occurred.

The display 114 may visually display information related to the vehicle 110. For example, the display 114 may provide various information related to a state of the vehicle 110 to the driver of the vehicle 110 under the control of the processor 116. The various information related to the state of the vehicle may include at least one among information representing whether various components included in the vehicle and/or at least one function of the vehicle are normally operated, and information representing the driving state of the vehicle.

If the processor 116 determines that the driving lane change is possible, and that the discretionary lane change (DLC) function is not in an active state, the display 114 may visually display a message requesting activation of the DLC function.

The controller 120 may control an operation of at least one component of the vehicle 110 and/or at least one function of the vehicle according to the control of the processor 116. The at least one function may be, for example, at least one among a steering function, an acceleration function (or a longitudinal acceleration function), a deceleration function (or a longitudinal deceleration function, a brake function), a lane change function, a lane detection function, an obstacle recognition and a distance detection function, a lateral control function, a powertrain control function, a safety zone detection function, an engine on/off, a power on/off, and a vehicle lock/unlock function.

The controller 115 may control at least one component of the vehicle and/or at least one function of the vehicle for autonomous driving of the vehicle 110 according to the control of the processor 130. For example, for the autonomous driving, the controller 115 may control the operation of at least one function among a steering function, an acceleration function, a deceleration function, a lane change function, a lane detection function, a lateral control function, an obstacle recognition and distance detection function, a powertrain control function, and a safe zone detection function.

The processor 116 may control the overall operation of the vehicle 110. The processor 116 may include an electrical control unit (ECU) capable of integrally controlling components in the vehicle 110. For example, the processor 116 may include a central processing unit (CPU) or a micro processing unit (MCU) capable of performing arithmetic processing.

The processor 116 may control the controller 115 based on the data received through the sensor unit 111 and the communication module 112. The processor 116 may generate a control signal for controlling the vehicle 110 according to the data received from the infrastructure 130, and send the generated control signal to the controller 115.

The processor 116 may mean a device capable of controlling the vehicle 110, and performing a series of operations or determinations for performing the lane change or vehicle passing. For example, in the processor 116, programs for performing the lane change or vehicle passing may be executed.

In the above-described FIG. 2, the controller 115 and the processor 116 are described as each separate component, however, the controller 115 and the processor 116 may be integrated into a single component.

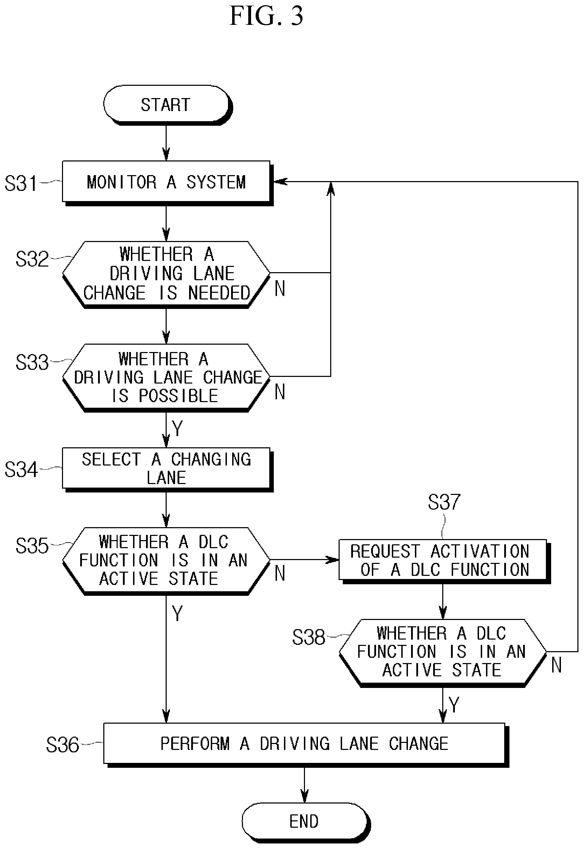

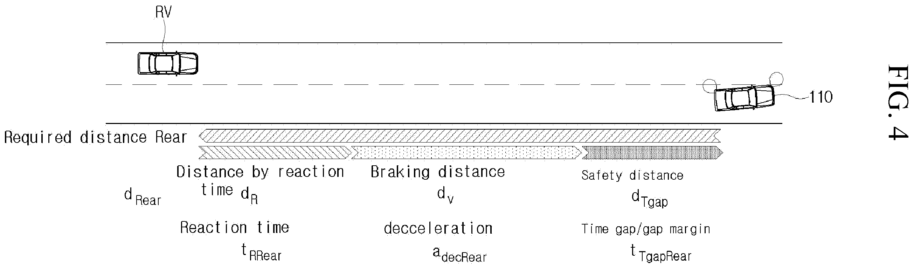

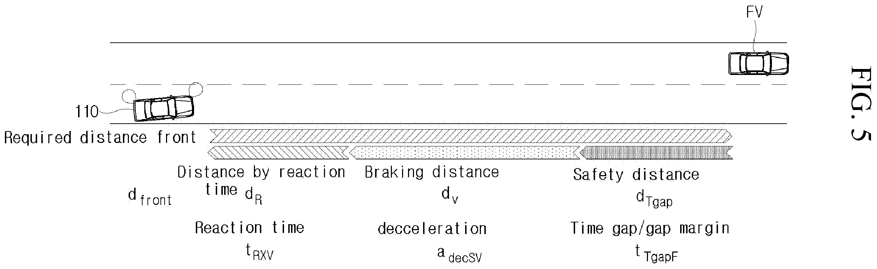

FIG. 3 is a flowchart illustrating an operation of a one-off lane change during the autonomous driving, FIG. 4 is a view illustrating a rear distance, and FIG. 5 is a view illustrating a front distance.

Referring to FIG. 3, a method for performing the one-off lane change during the autonomous driving may include determining whether a driving lane change is needed (e.g., determining whether to issue a command for a driving lane change), determining whether a driving lane change is possible when a driving lane change is needed (e.g., if a command for a driving lane change is issued or triggered), and performing a lane change according to whether a discretionary lane change (DLC) function is in an active state when a driving lane change is possible.

In more detail, in an operation S31, the processor 116 may monitor the motorway chauffeur systems (MCS), and determine whether the driving lane change is needed (e.g., determine whether to issue a command for a driving lane change) based on the monitoring result. In more detail, the processor 116 may determine whether the MCS is normally operated based on the vehicle state information, determine whether the target lane for finishing the lane change is continuously presented and detected, and determine whether the lane change is permitted based on information on lane change restrictions within the driving lane which is received from the infrastructure 130, or prestored in the map module. The processor 116 may determine that the driving lane change is needed (e.g., determine whether to issue a command for a driving lane change) when the MCS is normally operated, continuous presence of the target lane is detected, and the lane change is permitted.

In an operation S32, the processor 116 may determine whether the driving lane change is needed (e.g., determine whether to issue a command for a driving lane change). The processor 116 may determine that the driving lane change is needed (e.g., determine to issue a command for a driving lane change) using map information received from the infrastructure 130, road event information (e.g., a construction work, a traffic accident, etc.), and prestored map information, when a certain event occurs within a preset (e.g., predetermined) distance in a forward direction (e.g., 2 km) while driving. In more detail, the processor 116 may determine that the driving lane change is needed (e.g., a command for a driving lane change may be triggered), when a case thereof corresponds to at least one among a case in which a driving lane merges with a neighboring lane, a case in which a driving lane branches off in a direction different from a destination (e.g., diverging from a route to the destination), a case in which an event occurs on a road of a driving lane, and a case in which a traffic jam occurs only on a road of a driving lane.

The processor 116 may determine whether the driving lane change is needed (e.g., determine whether to issue a command for a driving lane change) based on a condition preset (e.g., predetermined) by the driver.

The processor may determine whether the driving lane change is needed (e.g., a command for a driving lane change may be triggered) based on a driving speed preset (e.g., predetermined) by the driver, a speed limit on a highway, and traffic flow. For example, when the driving speed preset (e.g., predetermined) by the driver is 80km/h or so while the vehicle 110 drives in the second lane on a three-lane highway having the speed limit on a highway of 110km/h, and the lanes of the highway is increased to four lanes, the processor 116 may determine that there is hindrance to the traffic flow and the driving lane change is needed (e.g., a command for a driving lane change may be triggered) because a difference between the preset (e.g., predetermined) driving speed and the speed limit is greater than a preset (e.g., predetermined) reference value (e.g., 20km/h) and the vehicle is driving in the second lane. Thereafter, the processor 116 may perform the lane change from the second lane to the third lane.

As an another example, when the driving speed preset (e.g., predetermined) by the driver is 100km/h or so while the vehicle 110 drives in the second lane on a three-lane highway having the speed limit on a highway is 110km/h, and the lanes of the highway is increased to four lanes, the processor 116 may determine that there is no hindrance to the traffic flow and the driving lane change is not needed (e.g., determine not to issue a command for a driving lane change) because a difference between the preset (e.g., predetermined) driving speed and the speed limit is not greater than a preset (e.g., predetermined) reference value (e.g., 20km/h) and the vehicle is driving in the second lane. At this instance, the processor 116 may control to continue driving in the second lane.

The processor 116 may determine whether the driving lane change is needed (e.g., determine whether to issue a command for a driving lane change) based on driving manner information preset (e.g., predetermined) by the driver. In an assumption that on a highway, the average driving speed is fast and a change width in acceleration and deceleration is great in the second lane, and the average driving speed is relatively slow than that of the second lane and a change in acceleration and deceleration is relatively low in the third lane, when the driving manner information preset (e.g., predetermined) by the driver is driving manner information (also referred to as driving pattern information) for yielding, the processor 116 may determine that the driving lane change is needed (e.g., determine to issue a command for a driving lane change). Thereafter, the processor 116 may perform the lane change from the second lane to the third lane.

If the driving manner information preset (e.g., predetermined) by the driver is driving manner information for minimum time driving, the processor 116 may determine that the driving lane change is not needed (e.g., determine not to issue a command for a driving lane change), and may control the vehicle to continue driving in the second lane.

If the driving manner information preset (e.g., predetermined) by the driver is the driving manner information for yielding at a time point where a certain distance (e.g., 3km) is left on the travel path to a branch of a road, the processor 116 may determine that the driving lane change is needed (e.g., determine to issue a command for a driving lane change) even if the average driving speed per lane is slower. At this instance, the processor 116 may perform the lane change to travel in an outer lane in advance.

If the driving manner information preset (e.g., predetermined) by the driver is the driving manner information for minimum time driving at a time point where a certain distance (e.g., 3km) is left on the travel path to a branch of a road, the processor 116 may determine that the driving lane change is not needed (e.g., determine not to issue a command for a driving lane change), continue driving in the acceleration lane without changing the lane, and then may perform the lane change when a time point of a mandatory lane change for tracking a path arrives.

The processor 116 may determine that the driving lane change is needed (e.g., determine to issue a command for a driving lane change) if a request for a one-off lane change to a certain lane is received from the driver.

In an operation S33, the processor 116 may determine whether the driving lane change is possible based on information such as lane change restriction information within the driving lane, geometrical information, and traffic flow information within a changing lane (e.g., a new lane that the vehicle is transitioning to). For example, the processor 116 may determine, based on the information, a safety score associated with the lane change. The processor 116 may determine whether the safety score associated with the lane change is, for example, above a threshold value.

The processor 116 may determine whether the driving lane change is possible based on the lane change restriction information within the driving lane. The lane change restriction information may include at least one information among whether a lane line is a solid line, whether a lane (e.g., a driving lane that the vehicle is currently driving on) is within a tunnel, whether a lane is a shoulder, and whether a lane is a passing lane (e.g., presence of a passing lane adjacent to the driving lane). For example, in case where a dotted line, not a solid line, exists in a lane changing section, in case where a lane changing section is outside a tunnel, in case where a lane changing section is inside a tunnel but a dotted line exists therein, in case where a lane changing section is not a shoulder, in case where a lane changing section is a passing lane, the processor 116 may determine that the driving lane change is possible. For example, the lane change is prohibited by the lane change restrictions, such as a case where a solid line exists in a lane changing section, a case where a lane changing section is inside a tunnel, a case where a lane changing section is a shoulder, and a case where a lane changing section is not a passing lane, the processor 116 may determine that the driving lane change is impossible.

The processor 116 may determine whether the driving lane change is possible based on the geometrical information. The geometrical information may include at least one information among whether a passing lane and a main road continue (e.g., whether a passing lane continues for at least a threshold distance), whether a sharp curvature exists in a forward direction (e.g., a curvature ahead), and whether there is an event section (e.g., whether a road section is associated with a traffic event, such as an accident, a construction, a detour, etc.). The processor 116 may determine whether a passing lane and a main road continue, whether a sharp curvature exists in a forward direction, and whether there is an event section based on the geometrical information received from the infrastructure 130 or stored in the map module 113. For example, when a case thereof does not correspond to a case where a passing lane and a main road continue, a case where a sharp curvature does not exist in a forward direction, and a case where a lane does not fall within a section in which an event occurs (e.g., construction work area), which are cases where the lane change is impossible considering geometry, the processor 116 may determine that the driving lane change is possible. For example, when a case thereof corresponds to a case where a passing lane and a main road do not continue, a case where a sharp curvature exists in a forward direction, and a case where a lane falls within a section in which an event occurs (e.g., construction work area), which are cases where the lane change is impossible considering geometry, the processor 116 may determine that the driving lane change is impossible.

The processor 116 may determine whether the driving lane change is possible based on traffic flow information within a changing lane. The traffic flow information within a changing lane may include at least one information among rear distance information or front distance information needed for the lane change, sensing information generated by the sensor unit 111, and an average speed information of a lane.

Referring to FIG. 4, the processor 116 may calculate a rear distance $d_{Rear}$ using a Mathematical Equation 1 below.

$$d_{Rear} = \left(v_{passerRear} - v_{SV}\right) \cdot t_{RRear} + \frac{\left(v_{passerRear} - v_{SV}\right)^2}{2 \cdot a_{decRear}} + v_{SV} \cdot t_{TgapRear}$$

$$\ldots\ldots \text{Equation (1)}$$

Here, $V_{passerRear}$ means the maximum speed of another vehicle at a rear RV which approaches in a rear direction, Vsv means a speed of the vehicle (own vehicle) 110, $t_{RRear}$ means a reaction time of another vehicle at a rear RV when the own vehicle 110 starts the lane change maneuver, $a_{decRear}$ means deceleration of another vehicle at a rear RV, $t_{TgapRear}$ means a time gap until another vehicle at a rear RV reaches a speed of the own vehicle 110 after the own vehicle 110 finishes deceleration.

The maximum speed $V_{passerRear}$ of another vehicle at a rear RV which approaches in a rear direction may be a speed obtained by adding a speed limit of another vehicle at a rear RV to a preset (e.g., predetermined) reference value (e.g., 30km/h).

The reaction time $t_{RRear}$ of another vehicle at a rear RV may be 1s, as a preset (e.g., predetermined) value, but is not limited thereto, and the reaction time thereof may have various values according to a setting.

The deceleration $a_{decRear}$ of another vehicle at a rear RV may be 3.5m/s² as a preset (e.g., predetermined) value, but is not limited thereto, and the deceleration thereof may have various values according to a setting.

The time gap $t_{TgapRear}$ until another vehicle at a rear RV reaches a speed of the own vehicle 110 after the own vehicle 110 finishes deceleration may be 0.8s, as a preset (e.g., predetermined) value, but is not limited thereto, and the time gap may have various values according to a setting.

Referring to FIG. 5, the processor 116 may calculate a front distance $d_{front}$ using a Mathematical Equation 2 below.

$$d_{Front} = \left(v_{passerF} - v_{SV}\right) \cdot t_{RSV} + \frac{\left(v_{passerF} - v_{SV}\right)^2}{2 \cdot a_{decSV}} + v_{SV} \cdot t_{TgapF}$$

...... Equation (2)

Here, $V_{passerF}$ means a speed of another vehicle in front FV, Vsv means a speed of the own vehicle 110, $t_{RSV}$ means a reaction time of the own vehicle 110 when the own vehicle 110 starts the lane change maneuver, $a_{decSV}$ means deceleration of the own vehicle 110, and $t_{TgapF}$ means a time gap until the own vehicle 110 reaches a speed of another vehicle in front FV after the own vehicle 110 finishes deceleration.

The reaction time $t_{RSV}$ of the own vehicle 110 may be 1s, as a preset (e.g., predetermined) value, but is not limited thereto, and the reaction time thereof may have various values according to a setting.

The deceleration $a_{decRear}$ of the own vehicle 110 may be 4m/s$^2$ as a preset (e.g., predetermined) value, but is not limited thereto, and the deceleration thereof may have various values according to a setting.

The processor 116 may calculate the time gap $t_{TgapF}$ until the own vehicle 110 reaches a speed of another vehicle in front FV after the own vehicle 110 finishes deceleration, using Mathematical Equations 3 or 4 below.

$$t_{TgapF} = 0.8[s] - \frac{\left(v_{passerF} - v_{SV}\right) \cdot 5.0[s]}{v_{SV}}$$

...... Equation (3)

$$t_{TgapF} = 15[m] - \frac{\left(v_{passerF} - v_{SV}\right) \cdot 5.0[s]}{v_{SV}}$$

...... Equation (4)

The processor 116 may determine that the driving lane change is possible when the front distance or the rear distance is greater than a preset (e.g., predetermined) reference distance.

In an operation S34, the processor 116 may select an optimized changing lane based on at least one among lane change restriction information within the driving lane, geometrical information, traffic flow information within a changing lane, a path to the destination, traffic flow, and autonomous driving settings, using a prestored algorithm.

In operations S35 and S36, the processor 116 may perform the driving lane change according to whether a discretionary lane change (DLC) function is in an active state when the driving lane change is possible. In more detail, the processor 116 may perform the driving lane change when it is determined that the driving lane change is possible and the DLC function is in an active state.

In an operation S37, when it is determined that the driving lane change is possible and the DLC function is not in an active state, the processor 116 may propose a lane change to the driver. In more detail, when it is determined that the driving lane change is possible and the DLC function is not in an active state, the processor 116 may output a message (e.g., on a screen) requesting activation of the DLC function through the display 114. If it is determined that the driving lane change is possible and the DLC function is not in an active state, the processor 116 may transmit a message requesting activation of the DLC function to a terminal of the driver through the communication module 112.

In an operation S38, the processor 116 may determine whether the DLC function is in an active state, and when the DLC function is in an active state, the processor 116 may perform the driving lane change.

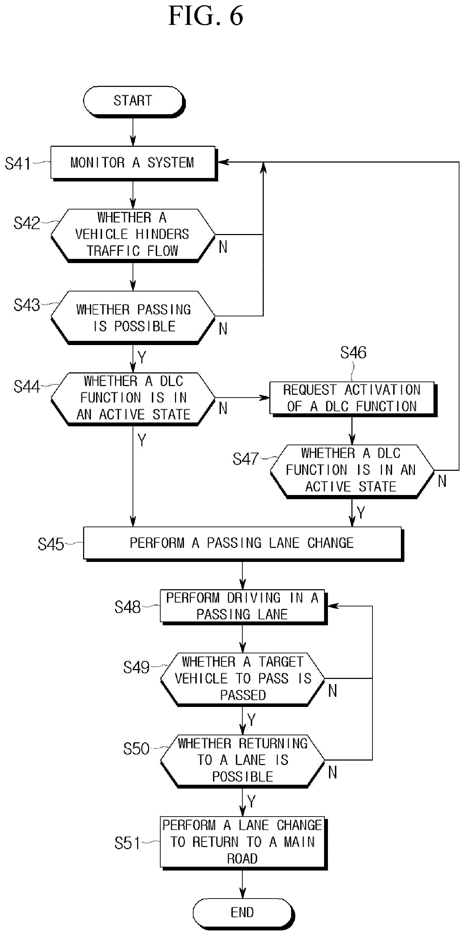

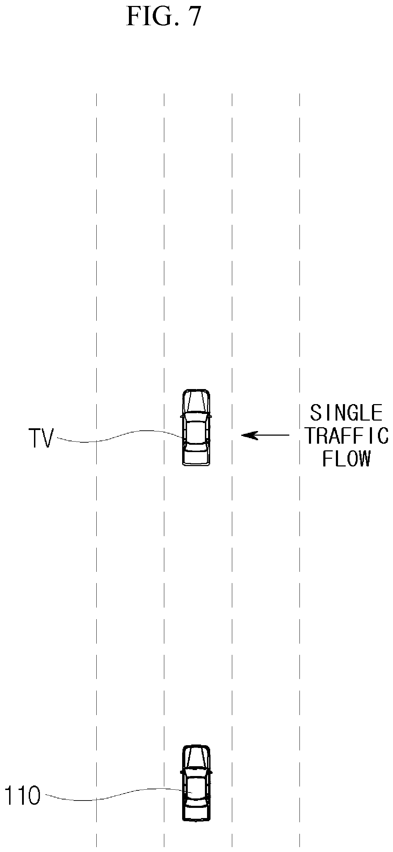

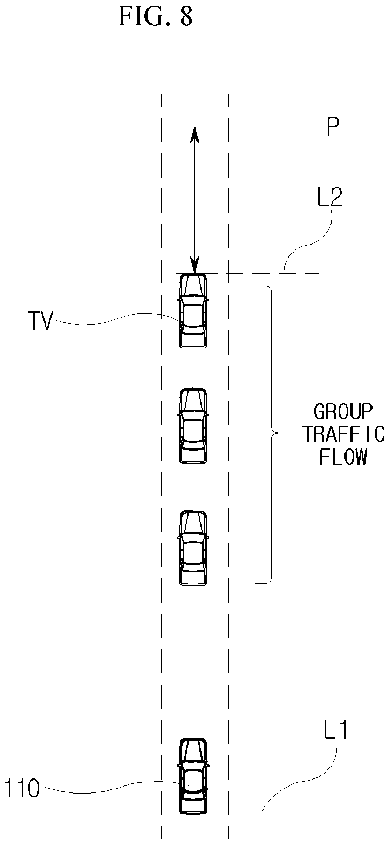

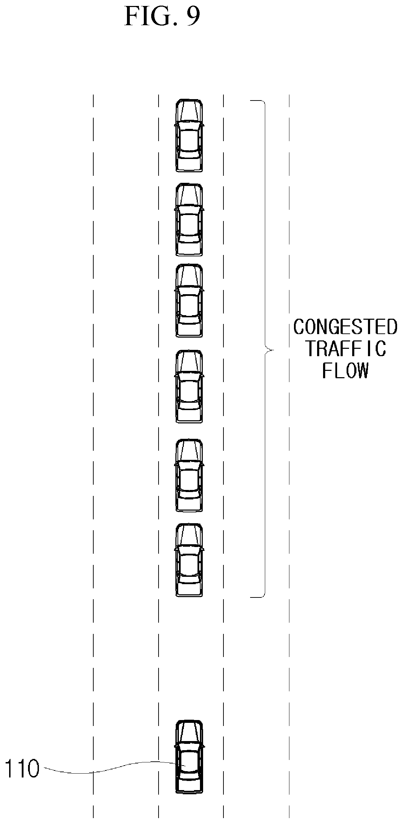

FIG. 6 is a flowchart illustrating an operation of the passing lane change during an autonomous driving. FIG. 7 is a view illustrating single traffic flow. FIG. 8 is a view illustrating group traffic flow. FIG. 9 is a view illustrating congested traffic flow.

Referring to FIG. 6, a method for performing a passing lane change during the autonomous driving may include determining a vehicle which hinders traffic flow, determining whether passing is possible when there is a vehicle which hinders traffic flow, and performing a passing lane change according to whether DLC function is in an active state when passing is possible, performing a lane change to return to a main road when an end point of a rear of the vehicle overtakes (e.g., passes) a starting point of a front of a target vehicle to pass.

In more detail, in an operation S41, the processor 116 may monitor the MCS, and determine whether the driving lane change is needed (e.g., determine whether to issue a command for a driving lane change) based on the monitoring result. In more detail, the processor 116 may determine whether the MCS is normally operated based on vehicle state information, determine whether continuous presence of the target lane for finishing the lane change is detected, and determine whether the lane change is permitted based on information on lane change restrictions within the driving lane which is received from the infrastructure 130, or prestored in the map module. When the MCS is normally operated, the continuous presence of the target lane is detected, and the lane change is permitted, the processor 116 may determine a vehicle which hinders a traffic flow. The processor 116 may determine a vehicle which hinders a traffic flow according to one or more predetermined hindrance criteria as described herein.

In an operation S42, the processor 116 may determine a vehicle which hinders traffic flow. In more detail, the processor 116 may determine a vehicle which hinders traffic flow in a state in which both (left/right) lanes of the vehicle 110 are normal traffic flow, based on driving information (e.g., a driving pattern) of another vehicle on a forward side. The driving information of another vehicle on a forward side may include at least one information among speed information (e.g., a speed of the vehicle), whether falling within sudden stopping or sudden acceleration (e.g., an acceleration above or below a threshold), a change width of lateral movement within a lane (e.g., a fluctuation, of a lateral movement of the vehicle within a lane, above a fluctuation threshold value), whether a hazard light (also referred to as an emergency light) blinks, and emergency message information (e.g., an emergency message from the vehicle).

If a difference between a speed of another vehicle on a front side driving in the current lane and a speed of another vehicle driving in a neighboring lane is greater than a preset (e.g., predetermined) reference value (e.g., 20 km/h), the processor 116 may determine the other vehicle on a front side to be the vehicle which hinders traffic flow.

If the number of times of sudden stopping or the number of times of sudden acceleration of the other vehicle on a front side is greater than a preset (e.g., predetermined) reference number of times, the processor 116 may determine the other vehicle on a front side to be the vehicle which hinders traffic flow.

If a change width of lateral movement within a lane of the other vehicle on a front side is equal to or greater than a preset (e.g., predetermined) reference value (e.g., 1m), the processor 116 may determine the other vehicle on a front side to be the vehicle which hinders traffic flow.

If a time for which an emergency light blinks of the other vehicle on a front side is equal to or greater than a preset (e.g., predetermined) reference time, the processor 116 may determine the other vehicle on a front side to be the vehicle which hinders traffic flow.

After receiving emergency message information (V2V or I2V) from the other vehicle on a front side, the processor 116 may determine the other vehicle on a front side to be the vehicle which hinders traffic flow.

In an operation S43, when it is determined that there is the vehicle which hinders traffic flow, the processor 116 may determine whether passing is possible based on at least one information among lane change restriction information within the driving lanes, geometrical information, and traffic flow information within a passing lane.

The processor 116 may determine whether passing is possible based on lane change restriction information within the driving lane. The lane change restriction information within the driving lane may include at least one information among whether a lane line is a solid line, whether a lane is within a tunnel, whether a lane is a shoulder, and whether a lane is a passing lane. For example, in case where a dotted line, not a solid line, exists in a lane changing section, in case where a lane changing section is outside a tunnel, in case where a lane changing section is inside a tunnel but a dotted line exists therein, in case where a lane changing section is not a shoulder, in case where a lane changing section is a passing lane, which do not correspond to lane change restrictions, the processor 116 may determine that the driving lane change is possible. For example, the lane change is prohibited by the lane change restrictions, such as corresponding to a case where a solid line exists in a lane changing section, a case where a lane changing section is inside a tunnel, a case where a lane changing section is a shoulder, and a case where a lane changing section is not a passing lane, the processor 116 may determine that the passing is impossible.

As an example, the processor 116 may determine whether passing is possible based on the geometrical information. The geometrical information may include at least one information among whether a passing lane and a main road continue, whether a sharp curvature exists in a forward direction, and whether there is an event section. The processor 116 may determine whether a passing lane and a main road continue, whether a sharp curvature exists in a forward direction, and whether there is an event section based on the geometrical information received from the infrastructure 130 or stored in the map module 113. For example, when a case thereof does not correspond to a case where a passing lane and a main road continue, a case where a sharp curvature does not exist in a forward direction, and a case where a lane does not fall within a section in which an event occurs (e.g., construction work area), which are cases where the lane change is impossible considering geometry, the processor 116 may determine that the driving lane change is possible. For example, when a case thereof corresponds to a case where a passing lane and a main road do not continue, a case where a sharp curvature exists in a forward direction, and a case where a lane falls within a section in which an event occurs (e.g., construction work area), which are cases where the lane change is impossible considering geometry, the processor 116 may determine that the driving lane change is impossible.

As an example, the processor 116 may determine whether passing is possible based on traffic flow information within a passing lane. The traffic flow information within a passing lane may include at least one information among rear distance information or front distance information needed for the lane change, sensing information generated by the sensor unit 111, and an average speed information of a lane.

A process for calculating the front distance and the rear distance is the same as the process for calculating the front distance and the rear distance which has been described with reference to FIG. 3, and the detailed description thereof will be omitted.

The processor 116 may determine whether passing is possible based on information on a type of the vehicle which hinders traffic flow. In more detail, the processor 116 may receive speed information from another vehicle driving in the current lane of the own vehicle 110 (current lane or own vehicle lane) in which the own vehicle 110 drives through V2V and I2V communication, calculate an average driving speed of the own vehicle lane based on speed information of another vehicle, and determine a type of the vehicle which hinders traffic flow based on a result of comparing the average driving speed of the own vehicle lane and a preset (e.g., predetermined) reference speed. For example, when the average driving speed of the own vehicle lane is equal to or smaller than 30km/h, the processor 116 may determine the vehicle which hinders traffic flow to be congested traffic flow.

Referring to FIGS. 7 to 9, the processor 116 may determine (e.g., based on information received from a sensor and/or a communication interface) as to which one is the vehicle which hinders traffic flow, among single traffic flow, group traffic flow, and congested traffic flow, based on the average driving speed of the own vehicle lane, which is the driving lane in which the own vehicle 110 drives, and may determine that the passing is possible (e.g., a safety score associated with a lane change is greater than a threshold safety score value) if the vehicle which hinders traffic flow is the single traffic flow, or the group traffic flow. The processor 116 may determine that the passing is impossible (e.g., a safety score associated with a lane change is less than a threshold safety score value) when the vehicle which hinders traffic flow is the congested traffic flow. In other words, the processor 116 may determine whether the traffic type of the vehicle hindering the traffic flow is a single traffic flow type, a group traffic flow type, or a congested traffic flow type. The single traffic flow type may mean that there is sufficient space around the vehicle (e.g., the distance to the vehicle ahead and the distance to the vehicle behind are both greater than a threshold distance). The group traffic flow type may mean that the vehicle is part of a cluster of multiple vehicles traveling together within a short distance from each other (e.g., at least one of the distance to the vehicle ahead or the distance to the vehicle behind is less than a threshold distance) but the number of vehicles in the cluster is still not very many (e.g., less than a threshold quantity). The congested traffic flow type may mean that the vehicle is traveling in a bigger cluster of vehicles (e.g., the distance to the vehicle ahead and the distance to the vehicle behind are both less than a threshold distance and the quantity of the vehicles in the cluster is greater than a threshold quantity). The processor 116 may determine a quantity of one or more vehicles of a vehicle cluster. A vehicle cluster may refer to a group of vehicles (or just one vehicle) where a gap between any two vehicles (if there is more than one vehicle in the cluster) is less than a threshold distance. The processor 116 may determine that the passing is possible (e.g., a safety score associated with a lane change is greater than a threshold safety score value), for example, if the quantity of vehicle(s) in a vehicle cluster is less than a threshold quantity. The processor 116 may determine that the passing is impossible (e.g., a safety score associated with a lane change is less than a threshold safety score value), for example, if the quantity of vehicle(s) in a vehicle cluster is greater than a threshold quantity.

When the vehicle which hinders traffic flow is the single traffic flow, or the group traffic flow, the processor 116 may set a frontmost vehicle to be a target vehicle TV to pass, set an end point of the front of the target vehicle TV to pass to be a starting point L2, and set a position spaced apart by a safety distance $d_{headwaygap}$ based on the starting point L2 of the target vehicle TV to pass to be a returning position P.

The processor 116 may calculate the safety distance $d_{headwaygap}$ using a Mathematical Equation 5.

$$d_{Headwaygap} = v_{TV} \cdot t_s$$

$$\cdots\cdots \text{Equation (5)}$$

Here, $V_{TV}$ means a speed of the target vehicle to pass, and ts means a preset (e.g., predetermined) reference time.

In operations S44 and S45, when the passing is possible, the processor 116 may perform the passing lane change according to whether the DLC function is in an active state. In more detail, the processor 116 may perform the passing lane change, when it is determined that the passing is possible, and the DLC function is in an active state.

In an operation S46, when it is determined that the passing is possible and the DLC function is not in an active state, the processor 116 may propose a lane change to the driver. In more detail, when it is determined that the passing is possible and the DLC function is not in an active state, the processor 116 may output a screen requesting activation of the DLC function through the display 114. If it is determined that the passing is possible and the DLC function is not in an active state, the processor 116 may transmit a message requesting activation of the DLC function to a terminal of the driver through the communication module 112.

In an operation S47, the processor 116 may determine whether the DLC function is in an active state, and when the DLC function is in an active state, the processor 116 may perform the passing lane change.

In an operation S48, the processor 116 may perform driving in the passing lane at a certain speed. In more detail, the processor 116 may perform driving in the passing lane at a lowest speed among a speed limit within a road, a faster speed than a speed of the target vehicle to pass (e.g., a predetermined speed over the speed of the target vehicle), and a speed of a following vehicle in a forward direction within a passing lane. The faster speed than a speed of the target vehicle may be a speed faster by as much as a preset (e.g., predetermined) reference value (e.g., 10km/h) than the speed of the target vehicle to pass.

In an operation S49, the processor 116 may determine whether the target vehicle to pass is passed. In more detail, referring to FIG. 8, the processor 116 may determine that the target vehicle to pass is passed when an end point L1 of a rear of the own vehicle 110 (e.g., a rearmost part of the vehicle 110) overtakes (e.g., passes) the starting point L2 of a front of the target vehicle to pass (e.g., the foremost part of the target vehicle).

In an operation S50, the processor 116 may determine whether returning to the lane is possible when it is determined that the own vehicle 110 passed the target vehicle TV to pass. In more detail, the processor 116 may determine whether the lane change to return to the main road (original lane) based on the lane change restriction information within a driving lane, geometrical information, and traffic flow information within a changing lane.

A process for determining whether the lane change is possible is the same as the process for performing the one-off lane change (the operation S33) which has been described with reference to FIG. 3, and the detailed description thereof will be omitted.

In an operation S51, when returning to the lane is possible, the processor 116 may perform the lane change to return to the main road (the original lane).

As described above, according to the present disclosure, the one-off lane change is possible according to the determination of a lane change or at the request of the driver during the autonomous driving. In addition, according to the present disclosure, it is possible to pass the vehicle which hinders the traffic flow according to the determination of a necessity of the passing or at the request of the driver during the autonomous driving.

The functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer.

If one or more embodiments of the present disclosure are implemented in program code or code segments, it should be appreciated that a code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. Additionally, in some aspects, the steps and/or actions of a method or algorithm can reside as one or any combination or set of codes and/or instructions on a machine readable medium and/or computer readable medium, which can be incorporated into a computer program product.

For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described example embodiments are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

As used herein, the term to "infer" or "inference" refers generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

Furthermore, as used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, and C", "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

Further embodiments

1. A first vehicle comprising:

one or more sensors configured to generate neighboring object information;
a communication interface; and
a processor configured to control, based on at least one of the neighboring object information or the communication interface, an autonomous driving operation of the first vehicle, wherein the processor is further configured to:

determine a second vehicle that hinders a traffic flow,
determine whether passing is possible when there is the vehicle which hinders traffic flow, and
perform a lane change from a driving lane to a passing lane according to whether a discretionary lane change (DLC) function is in an active state when passing is possible.

2. The first vehicle of embodiment 1, wherein the second vehicle is ahead of the first vehicle, and wherein the processor is configured to determine whether the second vehicle is a vehicle which hinders traffic flow based on a driving information of the second vehicle.

3. The first vehicle of embodiment 2, wherein the driving information of the second vehicle comprises at least one of:

a speed of the second vehicle,
an acceleration above a first threshold acceleration value,
an acceleration below a second threshold value,
a fluctuation, of a lateral movement of the second vehicle within the driving lane, above a fluctuation threshold value,
an activation state of a hazard light of the second vehicle, or
an emergency message from the second vehicle.

4. The first vehicle of any one of the preceding embodiments, wherein the processor is configured to determine whether passing is possible based on at least one of: lane change restriction information associated with the driving lane, geometrical information associated with the driving lane, or traffic flow information associated with the passing lane.

5. The first vehicle of embodiment 4, wherein the lane change restriction information indicates at least one of: whether a lane line of the driving lane is a solid line, whether the driving lane is in a tunnel, whether the driving lane is a shoulder, or presence of the passing lane.

6. The first vehicle of embodiment 4 or 5, wherein the geometrical information indicates at least one of: whether the passing lane continues for at least a threshold distance value, whether a road ahead has a curvature above a threshold curvature value, or whether there is a road section associated with a traffic event.

7. The first vehicle of any one of the preceding embodiments, wherein the processor is configured to:

determine a quantity of one or more vehicles of a vehicle cluster, wherein the vehicle cluster comprises the second vehicle, and wherein a gap between any two vehicles in the vehicle cluster is less than a threshold distance; and determine that passing is possible based on the quantity of the one or more vehicles of the vehicle cluster being less than a threshold quantity value.

8. The first vehicle of any one of the preceding embodiments, wherein the processor performs the lane change from the driving lane to the passing lane when passing is possible and the DLC function is in the active state.

9. The first vehicle of any one of the preceding embodiments,
wherein when passing is possible and the DLC function is not in the active state, the processor provides a message suggesting the lane change to a driver.

10. The first vehicle of embodiment 8 or 9, wherein the processor is configured to control the autonomous driving operation of the first vehicle to perform the lane change by:
controlling the autonomous driving operation of the first vehicle to drive in the passing lane at a lowest speed of: a speed limit of the passing lane, a predetermined speed over a speed of a target vehicle to pass, and a speed of a following vehicle in the passing lane.

11. The first vehicle of embodiment 10, wherein the processor is configured to control the autonomous driving operation of the first vehicle to perform the lane change by:
controlling the autonomous driving operation of the first vehicle to return to the driving lane after a rearmost part of the first vehicle overtakes a foremost part of a target vehicle to pass.

12. The first vehicle of embodiment 11, wherein the processor is further configured to:
determine whether the lane change is possible to return to the driving lane based on at least one of lane change restriction information associated with the passing lane, geometrical information associated with the passing lane, or traffic flow information associated with the passing lane.

13. A method performed by an apparatus of a first vehicle, the method comprising:

determining whether there is a second vehicle that hinders a traffic flow;
determining whether passing is possible when there is the vehicle which hinders traffic flow; and
performing a lane change from a driving lane to a passing lane according to whether a discretionary lane change (DLC) function is in an active state when passing is possible.

14. The method of embodiment 13, further comprising:
controlling the autonomous driving operation of the first vehicle to return to the driving lane after a rearmost part of the first vehicle overtakes a foremost part of a target vehicle to pass.

## Claims

1. A vehicle comprising:

one or more sensors configured to generate neighboring object information;
a communication interface; and

a processor configured to control, based on at least one of the neighboring object information or the communication interface, an autonomous driving operation of the vehicle, wherein the processor is further configured to:

determine whether a driving lane change is needed,
determine whether the driving lane change is possible when the driving lane change is needed, and
perform the driving lane change according to whether a discretionary lane change (DLC) function is in an active state when the driving lane change is possible.

2. The vehicle of claim 1, wherein the processor determines that the driving lane change is needed based on at least one of:

a driving lane merging with a neighboring lane,
the driving lane diverging from a route to a destination,
an event on a road of the driving lane, or
a traffic jam on the road of the driving lane.

3. The vehicle of claim 1 or 2, wherein the processor determines whether the driving lane change is needed based on a predetermined driving speed, a speed limit on a highway, and a traffic flow.

4. The vehicle of any one of the preceding claims, wherein the processor determines whether the driving lane change is needed based on predetermined driving pattern information.

5. The vehicle of any one of the preceding claims, wherein the processor determines that the driving lane change is needed when receiving, from a driver of the vehicle, a request to change to a certain lane.

6. The vehicle of any one of the preceding claims, wherein the processor determines whether the driving lane change is possible based on at least one of: lane change restriction information associated with a driving lane, geometrical information associated with the driving lane, or traffic flow information associated with a new lane that the vehicle is transitioning to.

7. The vehicle of claim 6, wherein the lane change restriction information indicates at least one of: whether a lane line of the driving lane is a solid line, whether the driving lane is in a tunnel, whether the driving lane is a shoulder, or whether the driving lane is a passing lane.

8. The vehicle of claim 6 or 7, wherein the geometrical information indicates at least one of: whether a passing lane continues for at least a threshold distance value, whether a road ahead has a curvature above a threshold curvature value, or whether there is a road section associated with a traffic event.

9. The vehicle of any one of the preceding claim, wherein when it is determined that the driving lane change is possible and the DLC function is in the active state, the processor performs the driving lane change.

10. The vehicle of any one of the preceding claim,
wherein when it is determined that the driving lane change is possible and the DLC function is not in the active state, the processor provides a message suggesting the driving lane change to a driver.

11. A method performed by an apparatus of a vehicle, in particular a vehicle according to any one of the preceding claims, the method comprising:

determining whether a driving lane change is needed;
determining whether a driving lane change is possible when a driving lane change is needed; and
performing a lane change according to whether a discretionary lane change (DLC) function is in an active state when a driving lane change is possible.

# FIG. 1

100

120          110          130

VEHICLE → INFRASTRUCTURE

# FIG. 2

# FIG. 3

START

S31 — MONITOR A SYSTEM

S32 — WHETHER A DRIVING LANE CHANGE IS NEEDED

N

S33 — WHETHER A DRIVING LANE CHANGE IS POSSIBLE

N

Y

S34 — SELECT A CHANGING LANE

S35 — WHETHER A DLC FUNCTION IS IN AN ACTIVE STATE

N → S37 REQUEST ACTIVATION OF A DLC FUNCTION

Y

S38 — WHETHER A DLC FUNCTION IS IN AN ACTIVE STATE

N

Y

S36 — PERFORM A DRIVING LANE CHANGE

END

**FIG. 4**

RV

110

Required distance Rear

$d_{Rear}$

Distance by reaction time $d_R$

Reaction time
$t_{RRear}$

Braking distance
$d_v$

decceleration
$a_{decRear}$

Safety distance
$d_{Tgap}$

Time gap/gap margin
$t_{TgapRear}$

EP 4 682 008 A1

FIG. 5

FV

110

Required distance front

$d_{front}$

Distance by reaction time $d_R$

Braking distance $d_v$

Safety distance $d_{Tgap}$

Reaction time $t_{RXV}$

decceleration $a_{decSV}$

Time gap/gap margin $t_{TgapF}$

# FIG. 6

```
                        ┌─────────────┐
                        │    START    │
                        └──────┬──────┘
                               │
S41 ──┐         ┌──────────────▼──────────────┐◄──────────────┐
      └─────────│      MONITOR A SYSTEM        │               │
                └──────────────┬──────────────┘               │
                               │                               │
S42 ──┐              ┌─────────▼─────────┐                     │
      └──────────────│    WHETHER A       │ N                  │
                     │  VEHICLE HINDERS   ├─────────┐          │
                     │   TRAFFIC FLOW     │         │          │
                     └─────────┬─────────┘         │          │
                               │                    │          │
S43 ──┐              ┌─────────▼─────────┐          │          │
      └──────────────│  WHETHER PASSING  │ N        │          │
                     │    IS POSSIBLE    ├──────────┤          │
                     └─────────┬─────────┘          │          │
                               │ Y                             │
                               │                S46 ──┐        │
S44 ──┐              ┌─────────▼─────────┐  ┌─────────▼──────┐ │
      └──────────────│   WHETHER A DLC   │ N│ REQUEST ACTIVATION│ │
                     │   FUNCTION IS IN  ├─►│  OF A DLC FUNCTION│ │
                     │   AN ACTIVE STATE │  └────────┬─────────┘ │
                     └─────────┬─────────┘           │           │
                               │ Y          S47 ─┐   │           │
                               │         ┌────────▼───────┐       │
                               │         │   WHETHER A DLC │ N     │
                               │         │  FUNCTION IS IN AN├─────┘
                               │         │   ACTIVE STATE  │
                               │         └────────┬────────┘
                               │                  │ Y
S45 ──┐  ┌─────────────────────▼──────────────────▼──────────┐
      └──│          PERFORM A PASSING LANE CHANGE             │
         └─────────────────────┬──────────────────────────────┘
                               │
S48 ──┐         ┌──────────────▼──────────────┐◄────────┐
      └─────────│   PERFORM DRIVING IN A       │         │
                │        PASSING LANE          │         │
                └──────────────┬──────────────┘         │
                               │                         │
S49 ──┐              ┌─────────▼─────────┐               │
      └──────────────│  WHETHER A TARGET  │ N            │
                     │  VEHICLE TO PASS IS├──────────────┤
                     │      PASSED        │              │
                     └─────────┬─────────┘               │
                               │ Y                        │
S50 ──┐              ┌─────────▼─────────┐               │
      └──────────────│  WHETHER RETURNING │ N            │
                     │   TO A LANE IS     ├──────────────┘
                     │     POSSIBLE       │
                     └─────────┬─────────┘
                               │ Y
S51 ──┐  ┌─────────────────────▼──────────────────┐
      └──│   PERFORM A LANE CHANGE                 │
         │   TO RETURN TO A MAIN                   │
         │            ROAD                         │
         └─────────────────────┬──────────────────┘
                               │
                        ┌──────▼──────┐
                        │     END     │
                        └─────────────┘
```

# FIG. 7

TV

SINGLE
TRAFFIC
FLOW

110

FIG. 8

GROUP
TRAFFIC
FLOW

# FIG. 9

CONGESTED
TRAFFIC
FLOW

110

Europäisches
Patentamt

European
Patent Office

Office européen
des brevets

# EUROPEAN SEARCH REPORT

**Application Number**

EP 25 15 4358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/204054 A1 (TANIGUCHI YOHEI [JP]) 30 June 2022 (2022-06-30) * paragraphs [0041] - [0107] * ----- | 1-11 | INV. B60W30/18 |
| X | KR 2021 0055155 A (HYUNDAI MOTOR CO LTD [KR]; KIA CORP [KR]) 17 May 2021 (2021-05-17) * paragraphs [0070] - [0072] * ----- | 1,11 | |
| A | US 2020/102010 A1 (KIM HOI WON [KR] ET AL) 2 April 2020 (2020-04-02) * paragraphs [0061] - [0063] * ----- | 10 | |

**TECHNICAL FIELDS SEARCHED (IPC)**

B60W

The present search report has been drawn up for all claims

| Place of search | Date of completion of the search | Examiner |
|---|---|---|
| Munich | 11 July 2025 | Müller-Nagy, Andrea |

EPO FORM 1503 03.82 (P04C01)

## ANNEX TO THE EUROPEAN SEARCH REPORT
## ON EUROPEAN PATENT APPLICATION NO.

EP 25 15 4358

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2025

| Patent document cited in search report | | Publication date | Patent family member(s) | | Publication date |
|---|---|---|---|---|---|
| US 2022204054 | A1 | 30-06-2022 | CN | 113811933 A | 17-12-2021 |
| | | | EP | 3971862 A1 | 23-03-2022 |
| | | | JP | 7140277 B2 | 21-09-2022 |
| | | | JP | WO2020230306 A1 | 19-11-2020 |
| | | | US | 2022204054 A1 | 30-06-2022 |
| | | | WO | 2020230306 A1 | 19-11-2020 |
| KR 20210055155 | A | 17-05-2021 | NONE | | |
| US 2020102010 | A1 | 02-04-2020 | CN | 110949408 A | 03-04-2020 |
| | | | EP | 3628560 A1 | 01-04-2020 |
| | | | KR | 20200039034 A | 16-04-2020 |
| | | | US | 2020102010 A1 | 02-04-2020 |

EPO FORM P0459